# EUROPEAN PATENT APPLICATION

(11) **EP 3 837 965 A1**
(43) Date of publication of application: **23.06.2021**
(21) Application number: 20214155.2
(22) Date of filing: 15.12.2020
(51) Int. Cl.: A01G 9/02, A01G 31/06

(54) **CULTIVATION SYSTEM**

(30) Priority: 18.12.2019 SE 1951494
(71) Applicant: Grönska Stadsodling 365 AB, 141 46 Huddinge (SE)
(72) Inventor: Lee, Robin, 141 46 Huddinge (SE); Olsson, Petter, 141 46 Huddinge (SE); de Brun Skantz, Natalie, 141 46 Huddinge (SE)
(74) Representative: AWA Sweden AB

## Description

### FIELD OF THE INVENTION

The present invention generally relates to cultivation of crops, and more specifically to vertical cultivation systems.

### BACKGROUND

The use of cultivation systems for growing crops is an area increasingly attracting attention. Compared to traditional farming, cultivation systems offer numerous advantages such as resource and space efficiency, making cultivation more versatile and enabling production closer to cities and, effectively, consumers.

In particular, there is currently a large interest in sustainable production of crops and plants. As the demand for sustainable production of food increases, so does the requirements on production and transport of plants such as vegetables and herbs. Thus, there is currently an increasing interest in locally produced goods. Cultivation of crops in or near cities does however require more efficient solutions to supply more consumers with locally grown crops, thus vertical cultivation systems is one increasingly popular area. Vertical cultivation systems may produce more crops in a smaller area, and may be especially suitable for indoors use making them ideal for cultivation of crops in or around cities. Vertical cultivation systems provide numerous advantages such as being environmentally friendly, requiring little space and may offer continuous, year-round, production of crops.

However, there is a wish to provide alternatives to the construction and design of present cultivation systems. More specifically, there is a need for improving the efficiency by allowing for a production of crops in a more cost and resource efficient manner.

Hence, it is an object of the present invention to provide a vertical cultivation system with alternative configurations than the ones described in the prior art, in order to increase efficiency in crops cultivation.

### SUMMARY OF THE INVENTION

It is an object of at least some of the embodiments of the present invention to overcome, or at least alleviate, the above mentioned drawbacks. In particular, it is an object to provide alternative vertical cultivation systems in order to improve the dynamics and efficiency in the cultivation of crops. This and other objects are achieved by providing a vertical cultivation system having the features in the independent claims. Preferred embodiments are defined in the dependent claims.

According to a first aspect of the present invention, there is provided a vertical cultivation system with gravity-based feed and irrigation. The system comprises a support structure with two guide elements arranged to form an inclined guideway for a number of cultivation trays. The guideway extends along an angle α to a horizontal plane and the guideway further has an inlet feed end and an outlet feed end, where the outlet feed end is arranged at the lower end of the inclined guideway.

The vertical cultivation system further comprises a plurality of substantially rectangular cultivation trays comprising a bottom structure enclosed by a front wall, a rear wall and a first and second side wall. The bottom structure comprises a plurality of essentially parallel water distribution grooves extending between the first and second side wall.

The rear wall comprises at least one inlet port and the front wall comprises at least one outlet port. The cultivation tray further comprises guide chutes arranged along the first and second side walls. The guide chutes are arranged at the angle α to the bottom structure such that the bottom structure is arranged substantially horizontal when the tray is arranged in the intended position along the guideway.

Further, the cultivation trays are slidably arranged along the guide elements and the plurality of cultivation trays forms a line of cultivation trays. The cultivation trays may slide utilizing the guide elements arranged on the guide chutes from the inlet feed end to the outlet feed end where the cultivation process may be completed. A cultivation tray in the line of cultivation trays may thus gradually descend towards the outlet feed end as cultivation trays are individually removed through the outlet feed. The angle of the guide chutes in relation to the bottom structure of the cultivation tray may thus entail the crops grown to be kept horizontal whilst the cultivation tray is located upon the inclined guide chutes. The gravity feed of the vertical cultivation system may be advantageous as it may for example offer a reliable and energy efficient drive. Utilizing the guideway for an entire cultivation process where new seeds, or seedlings, are entered through the one inlet feed end and crops ready for harvest exits through the outlet feed end may further be advantageous for facilitating maneuverability and may decrease manual labor and/or energy consumption.

Irrigation, such as water, may be supplied to a first cultivation tray located at the top of the line of cultivation trays, such as through the inlet feed end of the guideway. Excess irrigation in the cultivation tray may flow via the at least one outlet port of said cultivation tray into the at least one inlet port of an adjacent tray in the line of trays. Excess irrigation in the cultivation tray at the outlet feed end of the guideway may drain through the outlet feed end.

Thus, each cultivation tray in the vertical cultivation system may be provided with irrigation without having each tray irrigated separately. Providing only the first cultivation tray in a line of cultivation trays may simplify the irrigation process, which may be advantageous as less labor and/or less equipment may be required.

The crops to be cultivated may be placed in pots which may be placed in the cultivation tray, on top of the grooves, such that the pot is mostly dry whilst the roots of the crops may reach the irrigation in the grooves. The present invention may further utilize at least one cultivation carpet located in the cultivation tray, on the grooves. In such an embodiment, seeds, or seedlings, are grown directly in the cultivation carpet. Such a cultivation carpet may for example be made out of hemp, peat or any other suitable material. The cultivation carpet may be arranged to provide irrigation to the crops and/or the roots of a plant may reach through the cultivation carpet to the irrigation in the grooves below.

It will be appreciated that the vertical cultivation system may utilize gravity for both the tray feed mechanism as well as the irrigation process. Having unwanted excess irrigation flow out of the outlet of a first tray and into the inlet of another tray will leave a minimal amount of excess irrigation in any given tray.

A decrease of excess irrigation kept in a cultivation tray may lead to an increased circulation of irrigation in the cultivation trays, which may have positive effects on the cultivation process of crops. For example, the roots of the crops may receive more oxygen when excess irrigation runs off. Hence, an increased control of the irrigation process may be achieved, thus encouraging the growth of crops. Further, the circulation of irrigation may decrease unwanted growth of algae, bacteria or any other unwanted, potentially unsanitary, complication.

A decreased amount of irrigation kept in a cultivation tray also decreases the weight of the cultivation tray. This may further provide increased maneuverability, less energy usage and an increased efficiency. The gravity driven feed and irrigation solutions may further provide a reliable system requiring less maintenance.

According to some embodiments, the at least one outlet port in the front wall of the cultivation tray is located essentially at the bottom of the front wall. For example, the outlet port may be located at the bottom of the wall such that irrigation on the bottom structure of the cultivation tray may exit the tray through the outlet port. The present embodiment may be advantageous as excess irrigation is kept at a minimal level which may be advantageous as weight may be kept down, increasing maneuverability and decreasing stress on the support structure of the vertical cultivation system.

In some embodiments, the at least one outlet port of a first cultivation tray is essentially a spout. The spout may be connectable with the at least one inlet port of a second cultivation tray. This may function as a canal for excess irrigation, leading irrigation from one cultivation tray into the next cultivation tray, located at a lower position in the cultivation system. Utilizing a spout connection may thus form a pathway with less leakage which may decrease the amount of irrigation needed.

By "spout" it is here meant a protrusion adapted for directing a fluid, for example forming a canal or tap.

According to one embodiment, the dimensions of the plurality of water distribution grooves are essentially identical. In other words, the grooves of the bottom structure of the cultivation tray are basically of the same height and width, spread evenly across the bottom structure. The grooves may be straight and extend parallel to the front and back wall, in other words, having equal length. It will be appreciated that this configuration may provide a more even distribution of irrigation across the cultivation tray. This equal distribution may provide all crops grown in a cultivation tray with a practically equal amount of irrigation which may benefit crop production. Further, the present embodiment may provide equal weight distribution across the tray, which may decrease stress.

According to one embodiment, the depth of the plurality of water distribution grooves are within the range 10-50mm.

According to one embodiment, the width of the plurality of water distribution grooves are within the range 10-50mm.

According to one embodiment, the angle α is within the range 1,5°-10°, and more preferably within the range 2°-4°.

According to some embodiments, the vertical cultivation system further comprises at least one ventilation arrangement. The ventilation arrangement comprises at least one ventilation outlet arranged above the guideway such that air may be delivered to the plurality of cultivation trays. The ventilation arrangement may for example comprise ducts, vents and nozzles. The ventilation arrangement may deliver air from outside of the system to the cultivation trays which may encourage production of crops. Further, the placement of the ventilation outlets above one cultivation tray may entail placement directly under, or, in between two guide elements of the guideway above the mentioned cultivation tray. This may provide a compact vertical cultivation system where more cultivation trays may be fitted in a small space.

According to some embodiments, the vertical cultivation system further comprises a lighting arrangement. The lighting arrangement comprises a plurality of light emitting means arranged above each guideway. This meaning that light may be provided for the plurality of cultivation trays. The light emitting means may comprise light emitting diodes (LEDs), fluorescent lighting or any other light emitting configuration. The lighting arrangement may for example further comprise armature, and shade. Utilizing light emitting means arranged above the cultivation trays may encourage growth of crops and may further be positioned such that the cultivation system is suitable for indoor use, with limited natural sunlight, such as in a warehouse. This further increase usability as more crops may be cultivated in otherwise unsuitable locations.

According to some embodiments, the guide elements of the vertical cultivation system further comprises rolling means, such as wheels or rollers. These may be adapted for fitting to the guide chutes of the cultivation trays, thus allowing the cultivation trays to be rollably arranged upon the guide elements. It will be appreciated that such an arrangement may further enhance the slidable configuration of the cultivation trays upon the guide elements. A rollable configuration may thus decrease the need for manual labor and increase the reliability of the system by allowing cultivation trays to smoothly be transported from the inlet feed end toward the outlet feed end in a rollable manner.

According to some embodiments, the vertical cultivation system further comprises at least one lifting unit for inserting cultivation trays through the inlet feed and/or removing cultivation trays through the outlet feed. A lifting unit may here entail an automatic, or manually operated lifting device. This embodiment may be advantageous as, for example, the weight and size of the cultivation trays, along with location of the inlet and outlet feed ends may prove unsuitable for manual labor. Thus, such an embodiment may decrease health risks of manual labor. Further utilizing at least one lifting unit for the cultivation trays may increase the efficiency of the vertical cultivation system.

### BRIEF DESCRIPTION OF THE DRAWINGS

The above, as well as additional objects, features and advantages of the present invention, will be better understood through the following illustrative and non-limiting detailed description of embodiments of the present invention. Reference will be made to the appended drawings, on which:
figure 1 is a schematic view of a vertical cultivation system comprising support structure and cultivation trays arranged upon support structures according to some embodiments of the present invention;
figure 2 is a schematic view of a cultivation tray;
figure 3 is a schematic view of an inclined guideway comprising guide elements, with a plurality of trays arranged thereupon, further displaying an exemplary operation such that irrigation is displayed.

All the figures are schematic, generally not to scale, and generally only show parts which are necessary in order to elucidate the invention, whereas other parts may be omitted or merely suggested.

### DETAILED DESCRIPTION

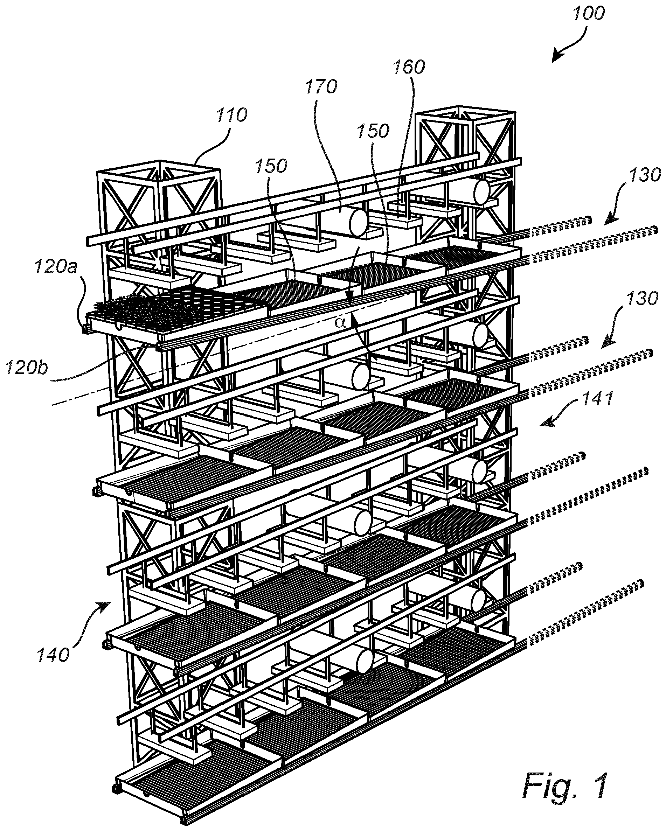

Figure 1 shows a vertical cultivation system 100 comprising a support structure 110 on which two guide elements 120a, 120b are arranged to form inclined guideways 130. The guide elements 120a, 120b of each guideway 130 may for example comprise a rail, where the two guide elements 120a, 120b are essentially parallel. The guideways 130 are shown to be arranged on different levels of the vertical cultivation system. The inclined guideways 130 are in the displayed embodiment parallel, i.e. inclined in the same angle α. The angle α may for example be within the range 1,5°-10° where a specific angle may be selected depending for example on the placement of the vertical cultivation system, available space and properties of the crops to be cultivated. Further, the displayed embodiment visualizes an inlet feed 140 and an outlet feed 141 at respective ends of the inclined guideways 130.

Displayed on top of the guideways 130 are a plurality of cultivation trays 150, where crops may be grown. Each cultivation tray rests upon two inclined guide elements 120a, 120b whereas the cultivation trays 150 are kept essentially horizontal. Further, the cultivation trays 150 are, on each guideway 130 of the vertical cultivation system 100, effectively arranged in a line of cultivation trays, extending from each inlet end 140 to each outlet end 141. If a cultivation tray is removed through the outlet, the following cultivation trays on the same guideway will slide toward the outlet 141, thus leaving room for a new cultivation tray 150 to be inserted at the inlet feed 140.

The depicted embodiment comprises a sliding arrangement whereas other embodiments may utilize rolling means, such as rollers or wheels, arranged in connection with the guide elements 120a, 120b such that the cultivation trays 150 arranged thereupon may be rollably fed.

The embodiment displayed suggests a vertical cultivation system 100 further comprising a lighting arrangement 160. In the embodiment depicted, a lighting arrangement 160 comprising LED tubes are arranged above each guideway 130, however, any lighting arrangement capable of emitting a light appropriate for photosynthesis may be utilized. For example, other embodiments may utilize LED, incandescent, High intensity discharge (HID) lights or fluorescent lamps or tubes or any combination thereof. The light may for example be of a color temperature (2000-7000 K) and may preferably be chosen similar to that of sunlight (5000-6500K).

Further, the embodiment displayed includes ventilation arrangement 170 located above the lighting arrangements 160. The ventilation arrangement 170 may for example supply the crops with air from outside of the system. Other embodiments may utilize circulated air.

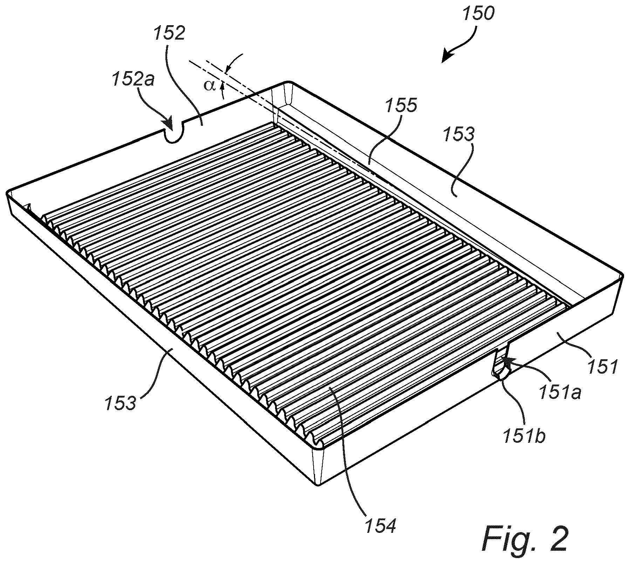

Figure 2 shows a schematic representation of an embodiment of a cultivation tray 150 comprising front wall 151, back wall 152, and two sidewalls 153. Visible on in the front wall is an outlet port 151a with a spout 151b. On the back wall in the depicted embodiment the inlet port 152a is seen in the center of the back wall. In some embodiments the spout 151b of the outlet port 151a may be utilized as a canal for irrigation to enter the inlet 152a of a different cultivation tray.

A plurality of grooves 154 are displayed on the bottom structure of the cultivation tray 150. Depicted in this embodiment are a plurality of grooves essentially parallel to the front wall 151 and back wall 152. Further, the grooves 154 are extending the entire bottom structure of the cultivation tray 150. The grooves 154 are of an essentially equal size. Other embodiments may see alterations of sizes and spacings across the bottom structure of the tray.

By the sidewalls 153 of the cultivation tray 150, guiding chutes 155 are arranged. The guiding chutes 155 are of such a width, height and angle α as is suitable for placement upon the guiding member as discussed in relation to figure 1. The angle α allows the bottom of the cultivation tray 150 to be essentially horizontal when the cultivation tray is placed on an inclined guideway.

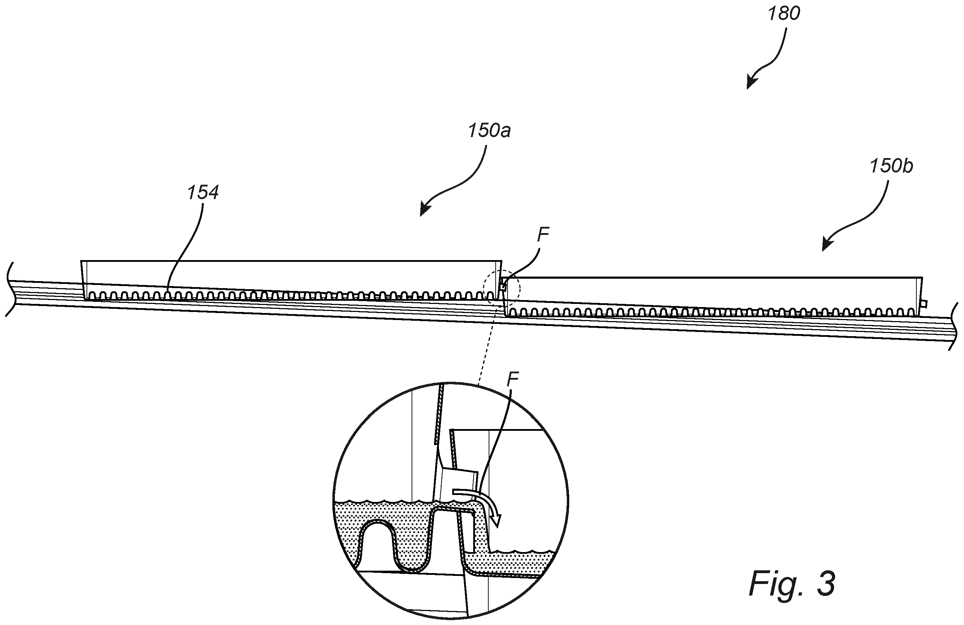

Figure 3 depicts an embodiment in which a line of cultivation trays 180, comprising two cultivation trays 150a and 150b, arranged upon an inclined guide element 120a. In operation a flow F of irrigation from the upper cultivation tray 150a is entering the lower cultivation tray 150b through the respective inlet and outlet of the two cultivation trays 150a and 150b. This occurs, as previously mentioned, when the upper cultivation tray 150a has received irrigation which fills the grooves 154 of the bottom of the first tray 150a.

While the invention has been illustrated and described in detail in the drawings and foregoing description, such illustration and description are to be considered illustrative or exemplary and not restrictive; the invention is not limited to the disclosed embodiments. The skilled person understands that many modifications, variations and alterations are conceivable within the scope as defined in the appended claims.

Additionally, variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

## Claims

1. A vertical cultivation system (100) with gravity-based feed and irrigation, comprising
a support structure (110);
two guide elements (120a, 120b) arranged to form an inclined guideway (130) for a number of cultivation trays (150), said guideway (130) extend along an angle α to a horizontal plane: said guideway (130) has an inlet feed end (140) and an outlet feed end (141) arranged at a lower position than the inlet feed end (140);
a plurality of substantially rectangular cultivation trays (150) comprising a bottom structure enclosed by a front wall (151), a rear wall (152) and a first and second side wall (153), said bottom structure comprising a plurality of essentially parallel water distribution grooves (154) extending between the first and second side wall (153), said rear wall (152) comprising at least one inlet port (152a) and said front wall (151) comprising at least one outlet port (151a), said cultivation tray (150) furthermore comprising guide chutes (155) arranged along the first and second side walls (153), said guide chutes (155) are arranged at the angle α to the bottom structure such that the bottom structure is arranged substantially horizontal when the tray is arranged in the intended position along the guideway (130); and
irrigation supply means arranged in the inlet feed end (140) of the guideway, wherein
the cultivation trays (150) are slidably arranged along the guide elements (120a, 120b) and
the plurality of cultivation trays (150) forms a line of cultivation trays (180), such that irrigation water is supplied to the cultivation tray (150) in the inlet feed end (140) of the guideway (130) and excess irrigation water in a cultivation tray (150) will flow via the at least one outlet port (151a) of said cultivation tray (150) into the at least one inlet port (152a) of the adjacent tray (150) in the line of trays (180) to the outlet feed end (141) of the gateway where it is drained.

2. A vertical cultivation system (100) according to any preceding claim, wherein the at least one outlet port (151b) in the front wall (151) of the cultivation tray (150) is located essentially at the bottom of the front wall (150).

3. A vertical cultivation system (100) according to any preceding claim, wherein the at least one outlet port (151a) of a first cultivation tray (150) is essentially a spout (151b), connectable with the at least one inlet port (152a) of a second cultivation tray (150).

4. A vertical cultivation system (100) according to any preceding claim, wherein the dimensions of the plurality of water distribution grooves (154) are essentially identical.

5. A vertical cultivation system (100) according to any preceding claim, wherein the depth of the plurality of water distribution grooves (154) are within the range 10-50mm.

6. A vertical cultivation system (100) according to any preceding claim wherein the width of the plurality of water distribution grooves (154) are within the range 10-50mm.

7. A vertical cultivation system (100) according to any preceding claim, wherein the angle α is within the range 1,5°-10°.

8. A vertical cultivation system (100) according to any preceding claim, further comprising at least one ventilation arrangement (170) comprising at least one ventilation outlet arranged above the guideway (130) such that air may be delivered to the plurality of cultivation trays (150).

9. A vertical cultivation system (100) according to any preceding claim, wherein the vertical cultivation system (100) further comprises a lighting arrangement (160) comprising a plurality of light emitting means arranged above each guideway (130) such that light may be provided for the plurality of cultivation trays (150).

10. A vertical cultivation system (100) according to any preceding claim, wherein, the guide elements (120a, 120b) further comprises rolling means, such as wheels or rollers, adapted for the guide chutes (155) of the cultivation trays (150) to be rollably arranged upon.

11. A vertical cultivation system (100) according to any preceding claim, wherein, the vertical cultivation system (100) further comprises at least one lifting unit for inserting cultivation trays through the inlet feed (140) and/or removing cultivation trays (150) through the outlet feed (141).
